# EUROPEAN PATENT SPECIFICATION

(11) **EP 3 351 518 B1**
(45) Date of publication and mention of the grant of the patent: **03.07.2019**
(21) Application number: 17206549.2
(22) Date of filing: 11.12.2017
(51) Int. Cl.: C04B 28/04

(54) **METHOD OF HOMOGENIZATION OF HIGH-PERFORMANCE OR ULTRA-HIGH-PERFORMANCE CONCRETE**
EINE METHODE ZUR HOMOGENISIERUNG VON HOCHSTLEISTUNGS- ODER ULTRAHOCHLEISTUNGSBETON
METHODE D'HOMOGENEISATION DE BETONS DE HAUTE OU ULTRA-HAUTE PERFORMANCE

(30) Priority: 24.01.2017 CZ 20170033
(43) Date of publication of application: 25.07.2018
(73) Proprietor: CVUT v Praze, 16629 Praha 6 (CZ)
(72) Inventor: FLADR, Josef, 27201 Kladno (CZ); BILY, Petr, 14200 Praha 4 (CZ); KOHOUTKOVA, Alena, 17000 Praha 7 (CZ)
(74) Representative: Kratochvil, Vaclav

(56) References cited:
- WO-A1-2014/094692
- SOBUZ H R ET AL: "Manufacturing ultra-high performance concrete utilising conventional materials and production methods", CONSTRUCTION AND BUILDING MATERIALS, ELSEVIER, NETHERLANDS, vol. 111, 23 February 2016 (2016-02-23), pages 251-261, XP029475066, ISSN: 0950-0618, DOI: 10.1016/J.CONBUILDMAT.2016.02.102
- Peter Schießl ET AL: "SCC and UHPC - Effect of Mixing Technology on Fresh Concrete Properties" In: "Advances in Construction Materials 2007", 1 January 2007 (2007-01-01), Springer Berlin Heidelberg, Berlin, Heidelberg, XP055474753, ISBN: 978-3-540-72447-6 pages 513-522, DOI: 10.1007/978-3-540-72448-3_52, * chapters 1-6; table 1: mix UHPC.A, UHPC.B *
- J FLÁDR ET AL: "Influence of mixing procedure on mechanical properties of high-performance concrete", I O P CONFERENCE SERIES: MATERIALS SCIENCE AND ENGINEERING, vol. 246, 1 September 2017 (2017-09-01), page 012012, XP055474689, GB ISSN: 1757-8981, DOI: 10.1088/1757-899X/246/1/012012
- MICHAL ZENÍSEK ET AL: "Mixing of Concretes with Extremely Low Water-Cement Ratio", DIFFUSION AND DEFECT DATA., vol. 259, 31 May 2017 (2017-05-31), pages 41-45, XP055474844, CH ISSN: 0377-6883, DOI: 10.4028/www.scientific.net/SSP.259.41

## Description

### Background of the Invention

The submitted invention deals with a new method of homogenization of high-performance or ultra-high-performance concrete. If this method is applied, it is possible to reduce water-to-binder ratio of the mixture with no negative effect on workability of fresh concrete and with positive effect on mechanical and physical properties of hardened concrete, at the same time.

### Description of Prior Art

Development of high-performance and ultra-high-performance concretes is based on the utilization of low water-to-binder ratio, which is the ratio of the weight of water to the weight of cement and other latent hydraulic additives used in a concrete mix (such as fly ash, slag, microsilica or metakaolin). The water-to-binder ratio of high-performance concretes usually ranges between 0.16 and 0.28. Sobuz, H.R. et al in "Manufacturing ultra-high performance concrete utilising conventional materials and production methods" in Construction and Building Materials, No. 111, pages 251-261 (2016) discloses a series of optimised mixes providing mix design guidelines for the preparation of UHPC. WO2014/094692A2 discloses ultra-high strength steel fiber reinforced concrete, useful in concrete building industry, comprising cement matrix containing silica cement, basalt aggregate, steel fibers having two types of fibers, admixtures and additives.

The method of homogenization of high-performance and ultra-high-performance concretes in current industrial practice is following. In the first step, all the aggregates, cement and possible additives are placed into the mixer. Then the homogenization of the mixture begins. With constant mixing, a dose of water is added together with plasticizing or superplasticizing admixture. Alternatively, the plasticizer or superplasticizer can be added later after the addition of water; the delay in such a case is up to 20 s. The water with possible admixtures is applied over the whole area or from as many points as possible into the mixing space. The mixing continues until all the constituents are homogenized. In case that the recipe of concrete contains dispersed steel fibre reinforcement, the reinforcement is added as the last constituent to avoid the creation of electric charge on the surface of the steel fibres. The electric charge may result from friction between the fibres and the mixer if the mixing process is excessively long.

Theoretically, it could be possible to improve the mechanical and physical properties of hardened cement paste by reducing water-to-binder ratio of concrete. In case that the aforementioned common method of homogenization of high-performance and ultra-high-performance concretes is used, i.e. the water is added over the whole area or from a large number of points into the mixing space, the reduction of water-to-binder ratio is not possible. If the water-to-binder ratio is reduced, the resulting concrete mixture is very sticky and it tends to create aggregations, i.e. clusters of particular constituents. The resulting concrete is non-homogenous with anisotropic mechanical and physical properties. From the practical point of view, this results mainly in considerable reduction of compressive strength of the material.

### Summary of the Invention

The aforementioned drawback is eliminated by the method of homogenization of high-performance or ultra-high-performance concrete which is the subject of this invention. Particular dry constituents, i.e. aggregates, cement and possible additives are mixed. Then the water is added. At the same instant or after a certain delay, plasticizing or superplasticizing admixtures are added, and the mixing continues until all the constituents are homogenized. The essence of the new method is following. In the first step, all the aggregates with maximum grain size up to 16 mm, weight dosage of 1000 - 2000 kg per 1 m³ of the concrete mixture (kg/m³) and compressive strength more than 250 MPa are placed into the mixer together with Portland cement in the weight dosage of 500 - 1000 kg/m³. The mixer is started up before, during or after insertion of these constituents. After homogenization of all the aforementioned dry constituents, the mixer is stopped and water with water-to-binder ratio of 0.13 - 0.25 is added together with plasticizing or superplasticizing admixture. The addition of water and plasticizer or superplasticizer is performed locally, into the smallest possible number of points in the mixing space depending on the used mixer. After the addition of the whole dosage of water and plasticizer or superplasticizer, the mixer is started up again and the mixing continues until all the constituents are homogenized. The length of homogenization depends on the efficiency and degree of filling of the mixing device.

It is advantageous if the water and plasticizing or superplasticizing admixtures are added into just one point in the mixer.

After homogenization of all the aforementioned constituents of high-performance or ultra-high-performance concrete, steel fibres 6 - 60 mm long in the weight dosage of 100 - 280 kg/m³ can be additionally mixed into the concrete mixture. It is also possible, depending on the recipe of concrete, to insert latent hydraulic additives into the mixer together with aggregates and cement. The dosage of the additives ranges between 5 - 30 % of the weight of cement.

When this method of homogenization is used, it is possible to reduce the water-to-binder ratio of the mixture of high-performance or ultra-high-performance concrete by up to 0.03 without a negative influence on the workability of fresh concrete. On the other hand, mechanical and physical properties of hardened concrete, mainly the bulk density and compressive strength, are improved. The improvement is given solely by the modification of homogenization procedure. There is no need to modify the constituents of concrete except for the amount of added water. As a result, a material with improved utility properties is obtained at the same production costs.

### Detailed Description of the Preferred Embodiments

The recipe suitable for high-performance and ultra-high-performance concrete is defined as follows for the purpose of this patent. It contains Portland cement in the dosage of 500 - 1000 kg/m³ and aggregate with compressive strength higher than 250 MPa, maximum grain size up to 16 mm and weight dosage 1000 - 2000 kg/m³. The dosage and ratio of sieve sizes of the aggregate are determined by gradation (particle size distribution curve) and mineralogical composition of the selected aggregate. Water-to-binder ratio ranges between 0.13 and 0.25.

The recipe constituents may be supplemented by steel fibres that are uniformly distributed and randomly oriented in all directions in the whole volume of the material. The purpose of addition of the fibres is to improve the compressive and tensile strength of concrete. The length of the fibres is 6 - 60 mm. The dosage is 100 - 280 kg/m³.

The recipe may be further supplemented by additives that are dosed in the amount of 5 - 30 % of the weight of cement.

The homogenization process is carried out in the following steps. At first, all the aggregates, Portland cement and possible additives are placed into the mixer. This can be done even while the mixer is running. Dry constituents are mixed until the mixture is properly homogenized and then the mixing process is interrupted. While the mixer is stopped, the water with plasticizing or superplasticizing admixture is added; the plasticizer or superplasticizer can be alternatively added later with certain delay after the water. In any case, the water and the admixture are added into the smallest possible number of points in the mixing space, depending on the technical parameters of the mixer. The water-to-binder ratio ranges between 0.13 - 0.25. The best results are achieved if the water is added in just one point in the mixer. After addition of water and plasticizing or superplasticizing admixtures, the mixer is started up again and the mixing continues until the mixture is properly homogenized. The length of homogenization depends on the efficiency and degree of filling of the mixing device. If the recipe of concrete contains dispersed steel reinforcement, the reinforcement is added as the last constituent after homogenization of all the other constituents.

If the mix contains additives, they are inserted into the mixer together with aggregates and Portland cement.

The advantages of the new method of homogenization of high-performance or ultra-high-performance concrete are documented by below mentioned results of experiments. Four sets of specimens A and B were produced. The recipes used for particular sets (see table 1) differ mainly in water-to-binder ratio, in case of set B3 the composition was slightly adjusted in order to verify the applicability of the new method to wider range of concrete mixtures. Different methods of homogenization defined by table 2 were used for particular sets. In case of set A, the method commonly used in current industrial practice was applied; in case of set B, the method which is the subject of this invention was exploited.

**Table 1: Tested concrete mixtures**

| **Constituent** | **Further specification** | **Set *A*** | **Set *B1*** | **Set *B2*** | **Set *B3*** |
|---|---|---|---|---|---|
| | | **Quantity [kg/m³]** | **Quantity [kg/m³]** | **Quantity t [kg/m³]** | **Quantity [kg/m³]** |
| Cement | | 600 | 600 | 600 | 700 |
| Water | | 150 | 180 | 140 | 150 |
| Water-to-binder ratio | | **0.20** | **0.24** | **0.18** | **0.17** |
| Aggregate | 0/4 mm | 400 | 400 | 400 | 960 |
| | 4/8 mm | 400 | 400 | 400 | 640 |
| | 8/16 mm | 800 | 800 | 800 | 0 |
| Fibres | Length 12 mm | 70 | 70 | 70 | 100 |
| | Length 35 mm | 70 | 70 | 70 | 0 |
| Microsilica | | 80 | 80 | 80 | 80 |
| Superplasticizer | | 30 | 30 | 30 | 35 |

**Table 2: Homogenization procedure**

| **Set *A*** | | **Sets *B*** | |
|---|---|---|---|
| **Step** | **Length [s]** | **Step** | **Length [s]** |
| Mixer activated | - | Mixer activated | - |
| Aggregate and cement inserted into the mixer | - | Aggregate and cement inserted into the mixer | - |
| Mixing | 30 | Mixing | 30 |
| Microsilica inserted | - | Microsilica inserted | - |
| Mixing | 300 | Mixing | 300 |
| | | **Mixer stopped** | - |
| Water inserted | - | Water with superplasticizer inserted | - |
| | | **Mixer activated** | - |
| Mixing | 5 | | |
| Superplasticizer inserted | - | | |
| Mixing | 90 | Mixing | 90 |
| Fibres inserted | - | Fibres inserted | - |
| Mixing | 90 | Mixing | 90 |
| Mixer stopped | - | Mixer stopped | - |

**Table 3: Compressive strength of cube specimens - set A**

| **Specimen** | **Dimensions [mm]** | **Weight [kg]** | **Bulk density [kg/m³]** | **Force [kN]** | **Strength [MPa]** |
|---|---|---|---|---|---|
| **A1** | 150.1 | 9401.1 | 2794.8 | 3036.4 | 134.97 |
| | 149.9 | | | | |
| | 149.5 | | | | |
| **A2** | 150.1 | 9531.6 | 2856.6 | 2941.7 | 132.24 |
| | 148.2 | | | | |
| | 150.0 | | | | |
| **A3** | 150.1 | 9557.6 | 2803.9 | 3586.0 | 157.41 |
| | 151.7 | | | | |
| | 149.7 | | | | |
| **A4** | 149.6 | 9419.6 | 2807.8 | 3423.5 | 153.12 |
| | 149.5 | | | | |
| | 150.0 | | | | |
| **A5** | 149.7 | 9416.4 | 285 | 3214.4 | 143.8 |
| | 149.4 | | | | |
| | 150.1 | | | | |
| **A6** | 149.9 | 9403.6 | 2812.4 | 3077.4 | 137.53 |
| | 149.2 | | | | |
| | 149.5 | | | | |
| | | **average** | **2855** | | **143.18** |
| | | | **Standard deviation** | | **10.20** |
| | | | **Variation coefficient** | | **0.07** |
| | | | **Characteristic strength** | | **120.96** |

**Table 4: Compressive strength of cube specimens - set B1**

| **Specimen** | **Dimensions [mm]** | **Weight [kg]** | **Bulk density [kg/m³]** | **Force [kN]** | **Strength [MPa]** |
|---|---|---|---|---|---|
| **B1.1** | 150.0 | 9594.4 | 2847 | 3105.7 | 137.78 |
| | 150.3 | | | | |
| | 149.5 | | | | |
| **B1.2** | 150.0 | 9593.5 | 2839 | 2947.7 | 130.57 |
| | 150.5 | | | | |
| | 149.7 | | | | |
| **B1.3** | 149.8 | 9565.1 | 2842 | 3302.6 | 147.25 |
| | 149.7 | | | | |
| | 150.0 | | | | |
| **B1.4** | 150.1 | 9564.6 | 2840 | 2968.1 | 131.83 |
| | 150.0 | | | | |
| | 149.6 | | | | |
| **B1.5** | 149.9 | 9570.5 | 2855 | 3005.9 | 134.20 |
| | 149.4 | | | | |
| | 149.6 | | | | |
| **B1.6** | 150.2 | 9577.7 | 2833 | 3062.7 | 136.05 |
| | 149.9 | | | | |
| | 150.2 | | | | |
| | | **average** | **2843** | | **136.28** |
| | | | **Standard deviation** | | **5.99** |
| | | | **Variation coefficient** | | **0.04** |
| | | | **Characteristic strength** | | **123.24** |

**Table 5: Compressive strength of cube specimens - set B2**

| **Specimen** | **Dimensions [mm]** | **Weight [kg]** | **Bulk density [kg/m³**] | **Force [kN]** | **Strength [MPa]** |
|---|---|---|---|---|---|
| **B2.1** | 150.0 | 9615.6 | 2858.6 | 3650.0 | 162.79 |
| | 149.5 | | | | |
| | 150.0 | | | | |
| **B2.2** | 149.7 | 9640.0 | 2828.1 | 3241.0 | 142.52 |
| | 151.9 | | | | |
| | 149.9 | | | | |
| **B2.3** | 149.6 | 9651.5 | 2906.0 | 3696.4 | 166.68 |
| | 148.3 | | | | |
| | 149.7 | | | | |
| **B2.4** | 149.8 | 9705.3 | 2847.2 | 3736.0 | 164.34 |
| | 151.8 | | | | |
| | 149.9 | | | | |
| **B2.5** | 149.9 | 9602.7 | 2847.1 | 3793.4 | 168.37 |
| | 150.3 | | | | |
| | 149.7 | | | | |
| **B2.6** | 150.0 | 9711.4 | 2856.6 | 3482.5 | 153.22 |
| | 151.5 | | | | |
| | 149.6 | | | | |
| | | **average** | **2860** | | **159.65** |
| | | | **Standard deviation** | | **9.92** |
| | | | **Variation coefficient** | | **0.06** |
| | | | **Characteristic strength** | | **138.06** |

**Table 6: Compressive strength of cube specimens - set B3**

| **Specimen** | **Dimensions [mm]** | **Weight [kg]** | **Bulk density [kg/m³**] | **Force [kN]** | **Strength [MPa]** |
|---|---|---|---|---|---|
| **B3.1** | 149.7 | 9564.1 | 2840 | 3530.8 | 157.17 |
| | 150.1 | | | | |
| | 149.9 | | | | |
| **B3.2** | 149.8 | 9711.4 | 2895 | 3763.0 | 165.16 |
| | 149.3 | | | | |
| | 150.0 | | | | |
| **B3.3** | 149.8 | 9733.1 | 2897 | 3911.0 | 174.19 |
| | 149.9 | | | | |
| | 149.6 | | | | |
| **B3.4** | 150.1 | 9732.8 | 2909 | 3811.6 | 170.52 |
| | 149.0 | | | | |
| | 149.7 | | | | |
| **B3.5** | 149.5 | 9595.1 | 2835 | 3599.2 | 159.54 |
| | 150.9 | | | | |
| | 150.0 | | | | |
| **B3.6** | 149.7 | 9672.9 | 2917 | 3785.1 | 170.74 |
| | 148.1 | | | | |
| | 149.6 | | | | |
| | | **average** | **2882** | | **166.73** |
| | | | **Standard deviation** | | **6.80** |
| | | | **Variation coefficient** | | **0.04** |
| | | | **Characteristic strength** | | **151.91** |

The comparison of compressive strength reached for set A with the strengths reached for sets B clearly shows the contribution of the new homogenization procedure. In case of B1 mixture, almost the same characteristic compressive strength as in case of A mixture was reached even though the water-to-binder ratio was increased; the increase of water-to-binder ratio generally results in improved workability of the mixture. In case of B2 mixture, the reduction of water-to-binder ratio led to higher characteristic compressive strength (by 14 %) with the same composition of the mixture. B3 mixture shows that the new homogenization method can be successfully used even in case that the composition of the mixture is adjusted and water-to-binder ratio is further reduced (by 0.03 in this case). Characteristic strength reached for B3 mixture homogenized by the method which is the subject of this invention was 26 % higher than the strength of A mixture homogenized by the method commonly used in current industrial practice. This confirms the positive effect of the new homogenization method on physical and mechanical properties of high-performance or ultra-high-performance concrete.

### Industrial Applicability

The new proposed method of homogenization improves physical and mechanical properties of high-performance or ultra-high-performance concrete without the need to use additional special constituents that would increase the production costs. By reducing the amount of water added to the mixture, the cement matrix will be less porous, leading to increased durability of concrete against environmental effects. The products made of such concrete will be suitable mainly for outdoor elements and structures with increased demands on durability and maintenance-free operation. The elements and structures will be slight, because the outstanding physical and mechanical properties of concrete will allow decreasing their cross-sectional dimensions.

## Claims

1. Method of homogenization of high-performance or ultra-high-performance concrete, in which the particular dry constituents, namely aggregate, cement and possible additives, are mixed, the water is added and together with water the plasticizing or superplasticizing admixtures are added and the mixing continues until the mixture is properly homogenized, **characterized by the fact** that in the first step, all the aggregates with maximum grain size up to 16 mm, weight dosage of 1000 - 2000 kg/m³ and compressive strength more than 250 MPa are placed into the mixer together with Portland cement in the weight dosage of 500 - 1000 kg/m³, while the mixer is started up before, during or after insertion of these constituents, after homogenization of the aforementioned constituents the mixer is stopped and water with water-to-binder ratio in the range of 0.13 - 0.25 is added to the dry mixture together with plasticizing or superplasticizing admixture, the addition of water and plasticizer or superplasticizer is performed locally, into the smallest possible number of points in the mixing space depending on the used mixer, whereupon the mixer is started up again after the addition of the whole dosage of water with plasticizing or superplasticizing admixture and the mixing continues until the mixture is properly homogenized, while the length of homogenization depends on the efficiency and degree of filling of the mixing device.

2. The method according to claim 1 **characterized by the fact** that water and plasticizing or superplasticizing admixture are added in just one point in the mixing space.

3. The method according to claims 1 or 2 **characterized by the fact** that after homogenization of all constituents of high-performance or ultra-high-performance concrete, steel fibres with the length in the range of 6 - 60 mm and dosage of 100 - 280 kg/m³ are additionally mixed into the concrete mixture.

4. The method according to claim 1 and any of claims 2 or 3 **characterized by the fact** that additives are added into the mixer together with aggregate and cement, while the dosage of the additives is 5 - 30 % of the weight of cement.

## Patentansprüche

1. Das Verfahren der Homogenisierung von hochwertigem oder ultrahochwertigem Beton, wann einzelne trockenen Komponenten, bestehend aus Gesteinskörnung, Zement und eventuellen Beimischungen, miteinander vermischt werden, es wird Wasser hinzugefügt und gleichzeitig Plastifizierungs- oder Superplastifizierungsmittel, und das Gemisch wird bis zur Homogenisierung aller Komponenten gerührt, **gekennzeichnet dadurch, dass** in die Mischvorrichtung zuerst die gesamte Gesteinskörnung maximaler Fraktion von 16 mm, im Gewicht von 1000 bis 2000 kg/m³, mit Druckfestigkeit größer als 250 MPa, und Portlandzement im Volumen von 500 bis 1000 kg/m³ zugegeben werden, wobei die Mischvorrichtung vor, während oder nach der Zugabe dieser Komponenten eingeschaltet wird, nach der Homogenisierung der oben erwähnten Komponenten wird die Mischvorrichtung gestoppt und dem Gemisch wird Wasser mit Wasserkoeffizienten zwischen 0,13 bis 0,25 zusammen mit Plastifizierungs- oder Superplastifizierungsmittel zugegeben, die Zugabe von Wasser und Plastifizierungs- oder Superplastifizierungsmittel wird punktuell an möglichst wenigen Stellen im Mischraum je nach verwendeter Mischvorrichtung durchgeführt, worauf nach der vollständigen Zugabe von Wasser und Plastifizierungs- oder Superplastifizierungsmittel die Mischvorrichtung wieder aktiviert wird und es wird solange gemischt, bis die Komponenten vollständig homogenisiert sind, die Mischdauer hängt von der Effizienz und Füllrate der verwendeten Mischvorrichtung ab..

2. Das Verfahren nach Anspruch 1, **gekennzeichnet dadurch, dass** das Wasser und die Plastifizierungs- oder Superplastifizierungsmittel nur an einer Stelle im Mischraum zugegeben werden.

3. Das Verfahren nach Anspruch 1 oder 2, **gekennzeichnet dadurch, dass** nach dem Homogenisieren aller Komponenten des hochwertigen oder ultrahochwertigen Betons dem Gemisch Metalldrähte in Länge von 6 mm bis 60 mm, im Volumen von 100 bis 280 kg/m³ zugegeben werden.

4. Das Verfahren nach Anspruch 1 und nach einem der Ansprüche 2 oder 3, **gekennzeichnet dadurch, dass** zusammen mit der Gesteinskörnung und dem Zement in die Mischvorrichtung auch Beimischungen zugegeben werden, die in der Menge von 5 % bis 30 % von Zement-Gewichtsmenge dosiert werden.

## Revendications

1. Procédé d'homogénéisation d'un béton à hautes performances ou ultra hautes performances, dans lequel les différentes composantes formées par l'agrégat sec, le ciment et les adjuvants éventuels sont mélangés, de l'eau et des adjuvants de plastification ou de super-plastification sont ajoutées en même temps, et le mélange est mélangé jusqu'à l'homogénéisation de toutes les composantes, **caractérisé en ce que** tout d'abord, l'ensemble de l'agrégat de taille maximale de 16 mm dont la résistance à la compression est supérieure à 250 MPa est introduit dans le mélangeur à une dose pondérale de 1000 à 2000 kg/m³, ainsi que le ciment Portland à une dose de 500 à 1000 kg/m³, le mélangeur étant mis en marche avant ou pendant ou après l'introduction de ces composantes, après l'homogénéisation des composantes susmentionnées, le mélangeur est mis en arrêt et de l'eau dont le rapport d'eau se situe entre 0,13 à 0,25 et les adjuvants de plastification ou de super-plastification sont ajoutés au mélange sec, l'ajout de l'eau et des adjuvants de plastification ou de super-plastification se fait ponctuellement dans le plus petit nombre de points possible dans la zone de mélange en fonction du mélangeur utilisé, après l'ajout de la totalité d'eau et de l'adjuvant de plastification ou de super-plastification, le mélangeur est réactivé, et le processus de mélange se poursuit jusqu'à l'homogénéisation complète des composantes, sa durée dépendant de l'efficacité et du niveau de remplissage du mélangeur utilisé.

2. Procédé selon la revendication 1, **caractérisé en ce que** l'eau et les adjuvants de plastification ou de super-plastification sont ajoutés uniquement à un point de la zone de mélange.

3. Procédé selon la revendication 1 ou 2, **caractérisé en ce qu'après** l'homogénéisation de toute les composantes du béton à hautes performances ou ultra hautes performances, des fils métalliques d'une longueur comprise entre 6 mm et 60 mm sont ajoutés au mélange à une dose de 100 à 280 kg/m³.

4. Procédé selon la revendication 1 et l'une quelconque des revendications 2 ou 3 **caractérisé en ce qu'**avec l'agrégat et le ciment, des adjuvants sont également introduits dans le mélangeur étant dosés de 5% à 30% en poids de ciment.
